# EUROPÄISCHE PATENTANMELDUNG

(11) **EP 1 935 610 A1**
(43) Veröffentlichungstag der Anmeldung: **25.06.2008**
(21) Anmeldenummer: 07022088.4
(22) Anmeldetag: 14.11.2007
(51) Int. Cl.: B29C 47/12, B29C 49/00, F16L 47/00

(54) **Verfahren und Vorrichtung zur Herstellung eines Kunststoff-Formteils und hergestelltes Formteil**

(30) Priorität: 22.12.2006 DE 102006061059
(71) Anmelder: Drossbach GmbH & Co. KG, 86641 Rain am Lech (DE)
(72) Erfinder: Hetzner, Claus, 90513 Zirndorf (DE); Hiesinger, Robert, 86666 Burgheim (DE)
(74) Vertreter: Altenburg, Udo

(57) **Zusammenfassung**

Die Erfindung betrifft ein Verfahren zur Herstellung eines Kunststoff-Formteils, umfassend
a. Spritzen eines quasi-endlosen Kunststoffschlauchs (13) mittels eines Ringspalts (3a) eines Spritzkopfes (2);
b. Formen und zumindest teilweises Abkühlen des Kunststoffschlauchs (13) mittels einer an den Spritzkopf (2) anschließenden Formstrecke (7), wobei die Formstrecke (7) eine Mehrzahl von rückführbaren Formbacken (8) umfasst, wobei das Kunststoff-Formteil (11) als eine Wiederholeinheit des durch die Formbacken ausgeformten Kunststoffschlauchs (13) ausgebildet ist; und
c. Abtrennen zumindest einer der Wiederholeinheiten aus dem ausgeformten Kunststoffschlauch (13) als Kunststoff-Formteil (11).

## Beschreibung

Die Erfindung betrifft ein Verfahren zur Herstellung eines Kunststoff-Formteils, bei dem ein quasi-endloser Kunststoffschlauch mittels eines Ringspalts eines Spritzkopfes gespritzt wird. Die Erfindung betrifft zudem eine Vorrichtung zur Herstellung eines Kunststoff-Formteils nach dem Oberbegriff des Anspruchs 10. Ferner betrifft die Erfindung ein Kunststoff-Formteil, das durch ein erfindungsgemäßes Verfahren und/oder durch eine erfindungsgemäße Vorrichtung hergestellt wird sowie die Verwendung einer Vorrichtung zur Herstellung eines Kunststoffrohrs zur Herstellung von Kunststoff-Formteilen gemäß den Merkmalen des Anspruchs 20.

EP 1 243 400 B1 beschreibt eine Vorrichtung zum Herstellen von Wellrohren, bei der ein zur Fließfähigkeit erwärmter Kunststoff mittels eines Extruders durch einen ersten und einen zweiten Ringspalt eines Spritzkopfes gedrückt wird, so dass ein zweischichtiger Kunststoffschlauch entsteht. Der Kunststoffschlauch läuft mit seiner Innenseite zunächst über eine Kalibrierung und wird nachfolgend an die Innenwände von außengreifenden Formbacken angedrückt, so dass ein Kunststoffrohr mit außenliegenden Wellrippen und einer glatten Innenfläche ausgebildet wird. Um ein endloses oder quasi-endloses Kunststoffrohr herstellen zu können, sind die Formbacken Bestandteil einer Formstrecke, bei der mehrere aufeinanderfolgend angeordnete Formbacken mit dem Kunststoffrohr mitbewegt werden und anschließend über eine Rückführmechanik zum Beginn der Formstrecke rückgeführt werden.

Ferner sind Steckmuffen und Doppel-Steckmuffen für Kunststoff-Wellrohre bekannt, die einen Kragen mit einer glatten, zylindrischen Innenwand aufweisen, die über ein Ende eines Kunststoff-Wellrohres geschoben werden kann. Dabei können ein oder mehrere Dichtringe in den Rippen des Wellrohres eingelegt werden, um einen dichten Abschluss zwischen Steckmuffe und Kunststoffrohr zu erzielen. Derartige Steckmuffen werden grundsätzlich mit anderen Formungsverfahren für Kunststoff als die Wellrohre selbst hergestellt. Entsprechend finden hierfür spezielle Herstellungsmaschinen Verwendung.

Es ist die Aufgabe der Erfindung, Aufwand und Kosten bei der Herstellung von Kunststoff-Formteilen zu verringern.

Diese Aufgabe wird für ein eingangs genanntes Herstellungsverfahren zur Herstellung eines Kunststoff-Formteils erfindungsgemäß mit den Merkmalen des Anspruchs 1 gelöst. Die Herstellung von Kunststoff-Formteilen mittels einer an einen Spritzkopf mit Ringspalt anschließenden Formstrecke mit rückführbaren Formbacken führt zu einem quasi-endlosen Kunststoffschlauch, in dem abschnittweise aufeinanderfolgende Kunststoff-Formteile ausgeformt sind. Nach der Herstellung des Kunststoffschlauchs mit den eingebetteten Kunststoff-Formteilen können diese als Wiederholeinheiten des Kunststoffschlauchs abgetrennt werden, so dass letztlich das zu produzierende Kunststoff-Formteil erzeugt wird. Ein solches Herstellungsverfahren spart insbesondere dann Aufwand und Kosten, wenn eine entsprechende Herstellungsmaschine mit Formstrecke mit rückführbaren Formbacken vorhanden ist und z.B. zur Herstellung von Kunststoffrohren, insbesondere Kunststoff-Wellrohren genutzt wird.

In bevorzugter Ausführungsform des Verfahrens umfassen die Kunststoff-Formteile eine Steckmuffe, die insbesondere auf ein Ende eines Wellrohres aufsteckbar ist. Die Steckmuffe kann besonders bevorzugt als Doppel-Steckmuffe ausgebildet sein. So kann z.B. mittels der gleichen Maschine durch einfaches Auswechseln der Formbacken zum einen ein endloses Kunststoffwellrohr und zum anderen zu diesem Wellrohr passende Steckmuffen hergestellt werden.

Allgemein vorteilhaft wird im Zuge des Abtrennens gemäß Schritt c. ein Zwischenteil abgetrennt, das als zwischen aufeinanderfolgenden Wiederholeinheiten oder endlichen Kunststoff-Formteilen angeordneter Verschnitt ausgebildet ist. Ein solches Zwischenteil kann insbesondere eine Sicke umfassen. Hierdurch kann der Vorgang des Abtrennens vereinfacht und/oder optimiert werden. Die Sicke kann dabei z.B. eine Verstärkung darstellen, die ein einfaches und präzises Absägen des Kunststoff-Formteils aus dem quasi-endlosen Kunststoffschlauch ermöglicht.

In einer besonders bevorzugten Ausführungsform wird das Formteil durch zwei aufeinanderfolgende Formbacken der Formstrecke ausgebildet. Grundsätzlich kann aber auch in einer Formbacke eine Mehrzahl von aufeinanderfolgenden Formteilen ausgebildet sein oder es können mehr als zwei Formbacken insgesamt zur Ausbildung eines einzelnen Kunststoff-Formteils ausgeformt sein oder es kann genau eine Formbacke jeweils einem Kunststoff-Formteil bzw. einer Wiederholeinheit entsprechen.

In bevorzugter Weiterbildung wird der Kunststoffschlauch von innen mit einem Gas mit einem einstellbaren Druck beaufschlagt. Hierdurch kann der Kunststoffschlauch in seinem noch weichen Zustand auf definierte Weise von innen an die Formbacken angedrückt werden. Alternativ oder ergänzend können die Bereiche zwischen Formbacken und Außenwand des Kunststoffschlauchs evakuierbar sein, um mittels Unterdruck ein Anlegen des weichen Kunststoffschlauchs an die formgebenden Ausformungen der Formbacken zu bewirken.

Um neben der Druckbeaufschlagung zudem eine einstellbare und effektive Kühlung des Kunststoffschlauchs zu ermöglichen, ist das Gas vorteilhaft mit einer kontrollierten Durchflussrate spülbar. Dies kann bevorzugt und auf einfache Weise mittels eines steuerbaren Ventils erfolgen.

In einer weiteren vorteilhaften Ausführung wird eine zweite Kunststoffschicht des Kunststoffschlauchs mittels eines zweiten Ringspalts des Spritzkopfes gespritzt. Die Kunststoffe können dabei verschieden sein oder auch gleiche Kunststoffe mit unterschiedlichen Mengen an Additiven oder Farbpigmenten oder Ähnlichem. Hierdurch können die gestalterischen, mechanischen und chemischen Eigenschaften der Kunststoff-Formteile durch mehrschichtige Ausbildung optimiert werden. Besonders einfach und kostengünstig ist dies dann möglich, wenn der Spritzkopf aufgrund der alternativen Verwendung der Herstellungsvorrichtung ohnehin zwei oder mehr Ringspalte zur Herstellung von Rohren mit mehreren Schichten aufweist.

Die Aufgabe der Erfindung wird für eine eingangs genannte Vorrichtung zur Herstellung eines Kunststoff-Formteils erfindungsgemäß mit den kennzeichnenden Merkmalen des Anspruchs 10 gelöst. Die erfindungsgemäße Herstellungsvorrichtung kann vorteilhaft zum einen zur Produktion von Kunststoff-Formteilen insbesondere nach dem Verfahren nach Anspruch 1 dienen und zum anderen zur Produktion von Kunststoffrohren, insbesondere Kunststoff-Wellrohren. Die Herstellung von Kunststoff-Wellrohren mittels einer solchen Vorrichtung ist an sich bekannt, zum Beispiel durch das Dokument EP 1 243 400 B1.

Das Kunststoff-Formteil ist bevorzugt eine Steckmuffe, besonders vorteilhaft eine Doppel-Steckmuffe für ein Rohr. Dies ist besonders dann geeignet, wenn das zu der Steckmuffe oder Doppel-Steckmuffe passende Rohr, z.B. ein Wellrohr, auf der gleichen Herstellungsvorrichtung hergestellt wird, wobei im Wesentlichen lediglich die Formbacken ausgetauscht werden müssen, um entweder eine quasiendlose Aneinanderreihung von endlichen Kunststoff-Formteilen oder ein quasi-endloses Kunststoffrohr herzustellen.

Allgemein vorteilhaft umfasst die Vorrichtung ein dem Ringspalt nachgeordnetes und von innen an dem Kunststoffschlauch gleitend geführtes Dichtmittel. Ein von dem Dichtmittel begrenzter Raum ist dabei vorteilhaft durch eine Zuleitung mit einem Gas unter definiertem Druck beaufschlagbar. In vorteilhafter Weiterbildung ist zudem ein Volumenstrom des Gases durch den Raum mittels eines Regelglieds einstellbar. Das Regelglied kann insbesondere ein im Bereich des Dichtmittels angeordnetes, steuerbares Ventil umfassen. Insgesamt ist hierdurch der Herstellungsprozess des quasi-endlosen Schlauches mit den aufeinanderfolgenden Kunststoff-Formteilen auf einfache Weise optimierbar, indem zum einen die Andruckkraft des Schlauchs an die Formbacken regelbar ist und zum anderen eine Kühlleistung durch das durchströmende Gas von definierter Temperatur einstellbar ist.

In besonders bevorzugter Ausführungsform weist der Spritzkopf einen zweiten Ringspalt auf. Dabei kann es durchaus vorgesehen sein, dass der zweite Ringspalt nicht zur Herstellung des Kunststoff-Formteils beiträgt, jedoch zur alternativen Herstellung eines Kunststoffrohrs auf der gleichen Herstellungsvorrichtung.

Ebenso kann es vorteilhaft vorgesehen sein, dass dem Spritzkopf eine von dem Kunststoffschlauch umfangene Kalibrierung nachgeordnet ist, wobei insbesondere die Kalibrierung nicht von dem Kunststoffschlauch berührt wird. Hierdurch trägt die Kalibrierung nicht zur Herstellung der Kunststoff-Formteile bei, kann jedoch sinnvoll zur Herstellung eines Kunststoffrohrs auf an sich bekannte Weise auf der gleichen Vorrichtung eingesetzt werden. In geeigneten Fällen kann die Kalibrierung aber auch den Kunststoffschlauch im Zuge der Herstellung von Kunststoff-Formteilen berühren.

Die Aufgabe der Erfindung wird für ein Kunststoff-Formteil mit den Merkmalen der Ansprüche 18 und 19 gelöst.

Ferner wird die Aufgabe der Erfindung durch Verwendung einer Vorrichtung zur Herstellung eines Kunststoffrohrs zur Herstellung von Kunststoff-Formteilen gemäß den Merkmalen des Anspruchs 20 gelöst. Durch die Verwendung der gleichen Vorrichtung zur Herstellung grundsätzlich verschiedener Teile, zum einen eines quasi-endlosen Kunststoffrohrs und zum anderen eines endlichen Kunststoff-Formteils, können erhebliche Kosten eingespart werden. Insbesondere kann auf die Anschaffung von Spezialmaschinen zur Herstellung der Kunststoff-Formteile verzichtet werden. Im Wesentlichen müssen nur geeignete Formbacken bereitgestellt werden, die gegen die Formbacken einer Vorrichtung zur Herstellung eines Kunststoffrohrs ausgetauscht werden.

Eine besonders geeignete und Kosten sparende Kombination von herzustellenden Teilen liegt dann vor, wenn das Kunststoffrohr als Wellrohr, insbesondere mit zumindest zwei Schichten, ausgebildet ist. Das Kunststoff-Formteil ist dabei bevorzugt als eine Steckmuffe, insbesondere eine Doppel-Steckmuffe, ausgebildet. Die Steckmuffe ist besonders bevorzugt zur Aufbringung auf das durch die Vorrichtung herstellbare Kunststoffrohr ausgebildet. Hierbei passen die jeweiligen Durchmesser von Rohr und Formteil bzw. Steckmuffe auf einfache Weise zueinander, ohne zentrale Teile der Herstellungsvorrichtung wie etwa der Spritzkopf geändert werden müssen.

Grundsätzlich ist die Herstellung von Kunststoff-Formteilen mit einer Vorrichtung zur Herstellung von Kunststoff-Wellrohren im Vergleich zu bekannten Maßnahmen eher aufwändig. Bei Vorhandensein einer solchen Maschine zur Herstellung von Kunststoff-Wellrohren können jedoch erhebliche Kosten gespart werden, insbesondere wenn bedacht wird, dass bei Herstellern von Kunststoff-Wellrohren regelmäßig entsprechende Ansatzteilen für diese Wellrohre, wie etwa Kunststoff-Steckmuffen, nachgefragt werden. Die zu produzierende Menge solcher Ansatzteile für die Wellrohre ist im Verhältnis zu der Materialmenge der Wellrohre relativ gering, so dass der Einsatz der Vorrichtung zur Herstellung der Wellrohre für die Herstellung der Ansatzteile gemäß den erfindungsgemäßen Verfahren und Vorrichtungen eine erhebliche Kostenreduzierung bedeutet. Dies erfolgt vor allem dadurch, dass durch den Einsatz der nicht spezialisierten und teueren, jedoch ohnehin vorhandenen Maschine auf die Anschaffung von Spezialmaschinen verzichtet werden kann.

Weitere Vorteile und Merkmale der Erfindung ergeben sich aus dem nachfolgend beschriebenen Ausführungsbeispiel sowie aus den abhängigen Ansprüchen.

Nachfolgend wird ein bevorzugtes Ausführungsbeispiel der Erfindung beschrieben und anhand der anliegenden Zeichnungen näher erläutert.
- Fig. 1: zeigt eine schematische Draufsicht mit teilweiser Schnittansicht einer erfindungsgemäßen Vorrichtung.
- Fig. 2: zeigt eine Draufsicht auf ein erfindungsgemäßes Kunststoff-Formteil.
- Fig. 3: zeigt einen quasi-endlosen Kunststoffschlauch mit aufeinanderfolgenden erfindungsgemäßen Formteilen.
- Fig. 4: zeigt eine Detailvergrößerung der Vorrichtung aus Fig. 1 in einem anderen Betriebsmodus.

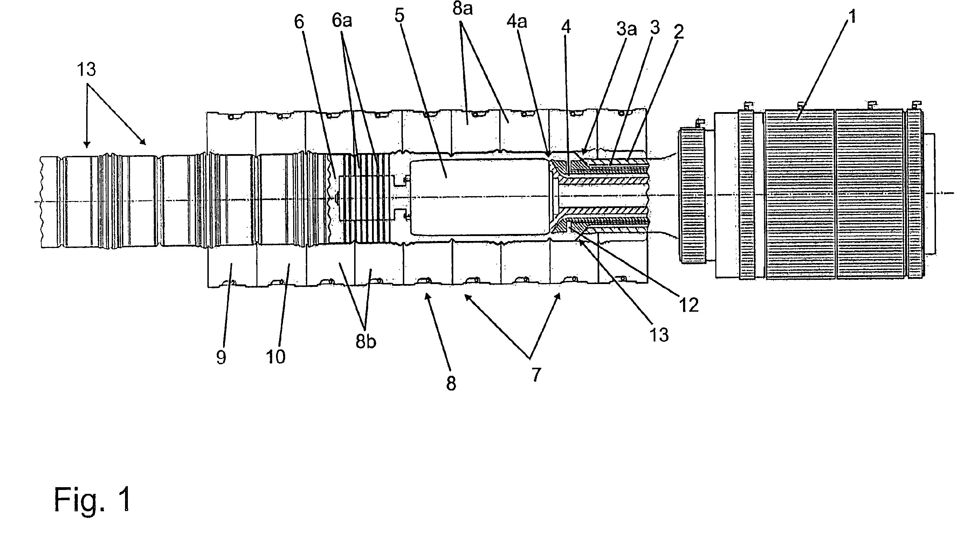

Die in Fig. 1 gezeigte Vorrichtung umfasst eine Extrudereinheit 1, durch die ein oder mehrere thermoplastische Kunststoffe in fließfähigem Zustand unter Druck einem Spritzkopf 2 zugeführt werden. Der Spritzkopf 2 umfasst vorliegend einen ersten Zuführkanal 3 mit einem um 360° umlaufenden, ringförmigen Austrittsspalt 3a und einen zweiten Zuführkanal 4 mit einem ebenfalls ringförmigen Austrittsspalt 4a.

An den Spritzkopf 2 schließt sich eine Kalibrierung 5 an. Der Kalibrierung 5 folgt in Förderrichtung des Kunststoffs ein Dichtmittel 6 nach, das eine Mehrzahl von elastischen Dichtscheiben 6a umfasst.

Um Spritzkopf 2, Kalibrierung 5 und Dichtmittel 6 herum ist eine Formstrecke 7 mit einer Mehrzahl von bewegbaren Formbacken 8 angeordnet. Die Formbacken 8 haben jeweils eine linke Formbackenhälfte 8a und eine rechte Formbackenhälfte 8b, die sich zusammen zu einem rotationssymmetrischen Formabschnitt der Formstrecke 7 ergänzen.

Die Formbacken 8 bzw. Formbackenhälften 8a, 8b werden gemeinsam in Förderrichtung des Kunststoffs (von rechts nach links in der Darstellung gemäß Fig. 1) bewegt, was mittels einer nicht dargestellten Antriebs- und Führungsmechanik erfolgt. Am Ende der Formstrecke 7 werden die Formbackenhälften 8a und 8b jeweils radial von dem geformten und an diesem Punkt ausreichend erhärteten Kunststoff weggeschwenkt und außen zum Beginn der Formstrecke zurückgeführt. Eine solche Formstrecke ist als Vorrichtung zur Produktion von mehrschichtigen Wellrohren an sich bekannt, siehe z.B. EP 1 243 400 B1.

Bei der erfindungsgemäßen Vorrichtung gemäß Fig. 1 liegen im Wesentlichen zwei Arten von Formbacken 9, 10 vor, die in der Formstrecke jeweils abwechselnd nacheinander angeordnet sind. Die dem Kunststoff zugewandten Ausformungen der Formbacke des ersten Typs 9 und der Formbacke des zweiten Typs 10 bilden insgesamt die Negativform der rotationssymmetrischen Außenfläche eines Kunststoff-Formteils.

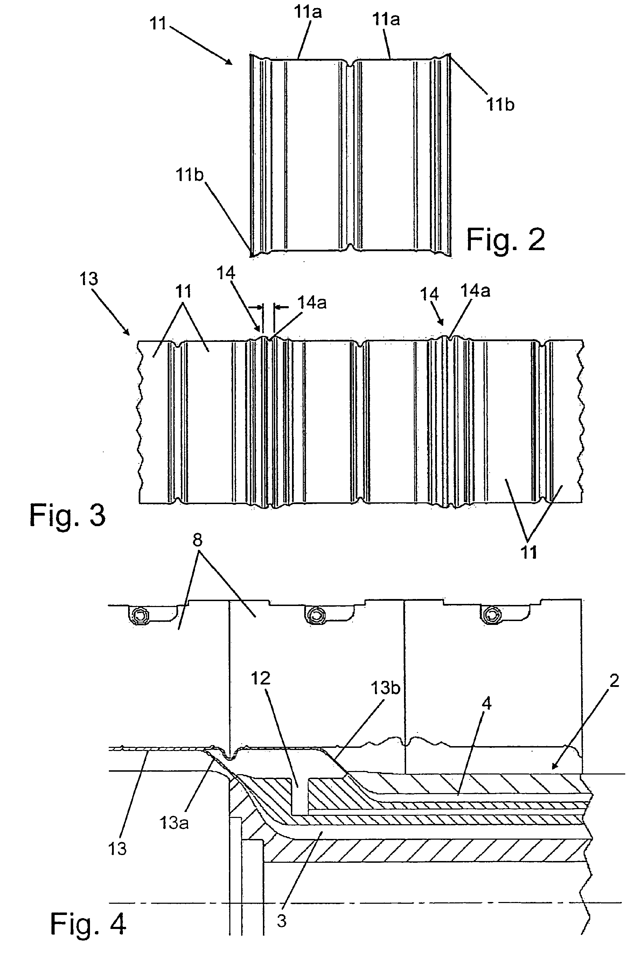

Vorliegend handelt es sich bei dem Kunststoff-Formteil um eine Doppel-Steckmuffe 11, wie sie in Fig. 2 dargestellt ist. Die erfindungsgemäßen Doppel-Steckmuffen 11 sind spiegelsymmetrisch bezüglich einer Mittenebene ausgebildet und haben jeweils zylindrische Wandabschnitte 11a, mit denen sie über die Enden eines Wellrohrs geschoben werden, bis die Wellrohr-Enden an einer mittigen Sicke der Steckmuffe 11 als Begrenzung anstoßen. Zur Vereinfachung des Aufschiebens auf das Wellrohr haben die Wandabschnitte 11a endseitig eine konische Aufkragung 11b. Zur Abdichtung der Steckmuffen 11 an den Enden der Wellrohre können die Wellrohre mit O-Ring-Dichtungen versehen sein. Dies kann auf einfache Weise dadurch geschehen, dass ein elastischer O-Ring in ein Wellental im Ansatzbereich eines Wellrohres eingelegt wird, wonach die Steckmuffe 11 dichtend über den O-Ring geschoben wird.

Der aus dem ersten Ringspalt 3a austretende fließfähige Kunststoff liegt zunächst in Form eines nicht ausgeformten, weichen Kunststoffschlauchs 13 vor. Mittels einer in dem Spritzkopf 2 ausgebildeten Zuleitung 12 wird ein Gas wie etwa Luft in das Innere des Kunststoffschlauchs 13 geleitet, wobei durch den Kunststoffschlauch 13, den Spritzkopf 2 und das Dichtmittel 6 ein geschlossener Raum gebildet wird, der durch das Gas druckbeaufschlagbar ist. Durch den beaufschlagten Druck wird der weiche Kunststoffschlauch 13 von innen an die sich bewegenden Formbacken 8 der Formstrecke 7 angedrückt. Die Geschwindigkeit der 'Formbacken 8 entspricht dabei im Wesentlichen der Austrittsgeschwindigkeit des Kunststoffschlauchs 13 aus dem Ringspalt 3a.

Alternativ oder ergänzend können in den Formbacken 8 Kanäle zur Evakuierung der zwischen dem Kunststoffschlauch 13 und der inneren Fläche der Formbacken 8 befindlichen Luft vorgesehen sein, so dass eine Anlage des Kunststoffschlauchs 13 an die Wandung oder Ausformung der Formbacken 8 unterstützend oder ausschließlich mittels Unterdruck erfolgen kann.

Insbesondere im Bereich des Dichtmittels 6 kann ein (nicht dargestelltes) regelbares Steuerventil vorgesehen sein, mittels dessen das über den Kanal 12 zugeführte Gas mit kontrollierter Rate abgelassen wird. Auf diese Weise ist ein Volumenstrom des Gases unabhängig von dem eingestellten Druck einstellbar, so dass eine verbesserte und insbesondere regelbare Kühlung der Innenseite des an den Formbacken anliegenden Kunststoffschlauchs 13 erreicht werden kann.

Sowohl durch den Kontakt mit dem Gas als auch durch den Kontakt mit den Wandungen der Formbacken 8 kühlt der Kunststoffschlauch 13 im Laufe des Transports in Förderrichtung (von rechts nach links gemäß Fig. 1) ab und verfestigt sich. Auf diese Weise wird ein quasi-endloser Kunststoffschlauch 13 produziert, der aus einer im Prinzip beliebigen Anzahl aufeinanderfolgender Kunststoff-Formteile 11 von jeweils endlicher Länge besteht (siehe Fig. 1 und Fig. 3).

In einem nachfolgenden, in den Zeichnungen nicht dargestellten Verfahrensschritt werden die Kunststoff-Formteile aus dem quasi-endlosen Kunststoffschlauch 13 abgetrennt, um einzelne, endlich lange Kunststoff-Formteile 11 wie in der Darstellung gemäß Fig. 2 zu erhalten.

Figur 3 zeigt einen Ausschnitt aus dem ausgeformten und ausgehärteten Kunststoffschlauch mit noch nicht abgetrennten Formteilen 11. Zwischen aufeinanderfolgenden Formteilen 11 liegt dabei jeweils ein Zwischenteil 14 vor, das eine sickenförmige Einbuchtung 14a umfasst. Das Zwischenteil 14 zwischen zwei benachbarten Formteilen 11 wird als Verschnitt ausgesägt. Die Abtrennung der Formteile 11 erfolgt dabei mittels eines umlaufenden Sägeinstruments, das eine Doppelklinge aufweist, die jeweils auf den der Sicke 14a benachbarten Wülsten bzw. Rändern der Formteile 11 angreift. Durch die Sicke 14a wird ein Nachgeben des Materials des Kunststoffschlauchs 13 am Aufsatzpunkt der Sägeklingen vermieden, so dass der Abtrennprozess kontrolliert und sauber erfolgt.

Figur 4 zeigt eine Detaildarstellung der gleichen Vorrichtung wie in Fig. 1, wobei in beiden Kanälen 3, 4 Kunststoff zugeführt wird, so dass der Kunststoffschlauch 13 sich aus einer ersten, inneren Schicht 13a und einer zweiten, äußeren Schicht 13b zusammensetzt. Dabei kann das Material der beiden Schichten 13a, 13b unterschiedlich sein, um eventuelle entsprechende Anforderungen an das Kunststoff-Formteil zu erfüllen.

Bei dem beschriebenen Herstellungsverfahren für ein Kunststoff-Formteil 11 wird insbesondere die Kalibrierung 5 der Herstellungsvorrichtung nicht verwendet. Die Kalibrierung 5 ist deswegen Bestandteil der Vorrichtung, weil diese regelmäßig zur Herstellung von Kunststoff-Wellrohren mit wenigstens zwei Schichten verwendet wird, wobei die äußere Schicht des Kunststoffrohrs Wellrippen mittels geeigneter, gegenüber der abgebildeten Vorrichtung ausgetauschter Formbacken erhält und die innere Schicht, die über die Kalibrierung 5 läuft, eine glatte Innenwandung des Wellrohres bildet. Bis auf die unterschiedliche Ausgestaltung der Formbacken 8 besteht daher kein wesentlicher Unterschied zwischen der Vorrichtung zur Herstellung eines Wellrohres mit glatter Innenfläche und der gezeigten Vorrichtung zur Herstellung eines Kunststoff-Formteils. Durch den Austausch der Formbacken 8 der Formstrecke 7 kann daher die Vorrichtung zur Herstellung eines Wellrohrs mit glatter Innenfläche auf einfache Weise und kostengünstig modifiziert werden, um Kunststoff-Formteile, vorliegend Doppel-Steckmuffen 11, herzustellen.

## Patentansprüche

1. Verfahren zur Herstellung eines Kunststoff-Formteils, umfassend
a. Spritzen eines quasi-endlosen Kunststoffschlauchs mittels eines Ringspalts eines Spritzkopfes;
b. Formen und zumindest teilweises Abkühlen des Kunststoffschlauchs mittels einer an den Spritzkopf anschließenden Formstrecke, wobei die Formstrecke eine Mehrzahl von rückführbaren Formbacken umfasst, wobei das Kunststoff-Formteil als eine Wiederholeinheit des durch die Formbacken ausgeformten Kunststoffschlauchs ausgebildet ist; und
c. Abtrennen zumindest einer der Wiederholeinheiten aus dem ausgeformten Kunststoffschlauch als Kunststoff-Formteil.

2. Verfahren nach Anspruch 1, **dadurch gekennzeichnet, dass** das Kunststoff-Formteil eine Steckmuffe umfasst, die insbesondere auf ein Ende eines Wellrohres aufsteckbar ist.

3. Verfahren nach Anspruch 2, **dadurch gekennzeichnet, dass** die Steckmuffe als Doppel-Steckmuffe ausgebildet ist.

4. Verfahren nach einem der vorhergehenden Ansprüche, **dadurch gekennzeichnet, dass** im Zuge des Abtrennens gemäß Schritt c. ein Zwischenteil abgetrennt wird, das als zwischen zwei aufeinander folgenden Wiederholeinheiten nachgeordneter Verschnitt ausgebildet ist.

5. Verfahren nach Anspruch 4, **dadurch gekennzeichnet, dass** das Zwischenteil eine Sicke umfasst.

6. Verfahren nach einem der vorhergehenden Ansprüche, **dadurch gekennzeichnet, dass** das Formteil durch zwei aufeinander folgende Formbacken der Formstrecke ausgebildet wird.

7. Verfahren nach einem der vorhergehenden Ansprüche, **dadurch gekennzeichnet, dass** der Kunststoffschlauch von innen mit einem Gas mit einstellbarem Druck beaufschlagt wird.

8. Verfahren nach Anspruch 7, **dadurch gekennzeichnet, dass** das Gas mit einer kontrollierten Durchflussrate gespült wird, insbesondere mittels eines steuerbaren Ventils.

9. Verfahren nach einem der vorhergehenden Ansprüche, **gekennzeichnet durch** Spritzen einer zweiten Kunststoffschicht des Kunststoffschlauchs mittels eines zweiten Ringspalts des Spritzkopfes.

10. Vorrichtung zur Herstellung eines Kunststoff-Formteils, umfassend einen Spritzkopf mit zumindest einem Ringspalt, und
eine dem Spritzkopf nachgeordnete Formstrecke, wobei die Formstrecke eine Mehrzahl von rückführbaren Formbacken umfasst,
**dadurch gekennzeichnet,**
**dass** das Formteil in einer Ausformung zumindest eines Teils zumindest einer der Formbacken ausbildbar ist, wobei mittels der Rückführung der Formbacken ein quasi-endloser Kunststoffschlauch mit einstückig verbundenen, aufeinander folgenden Kunststoffteilen ausbildbar ist.

11. Vorrichtung nach Anspruch 10, **dadurch gekennzeichnet, dass** das Kunststoff-Formteil eine Steckmuffe, insbesondere Doppel-Steckmuffe für ein Rohr ist.

12. Vorrichtung nach einem der Ansprüche 10 oder 11, **dadurch gekennzeichnet, dass** die Vorrichtung ein dem Ringspalt nachgeordnetes und von innen an dem Kunststoffschlauch gleitend geführtes Dichtmittel aufweist.

13. Vorrichtung nach Anspruch 12, **dadurch gekennzeichnet, dass** ein von dem Dichtmittel begrenzter Raum durch eine Zuleitung mit einem Gas unter definiertem Druck beaufschlagbar ist.

14. Vorrichtung nach Anspruch 12, **dadurch gekennzeichnet, dass** ein Volumenstrom des Gases durch den Raum mittels eines Regelglieds einstellbar ist.

15. Vorrichtung nach Anspruch 14, **dadurch gekennzeichnet, dass** das Regelglied ein im Bereich des Dichtmittels angeordnetes, steuerbares Ventil umfasst.

16. Vorrichtung nach einem der Ansprüche 10 bis 15, **dadurch gekennzeichnet, dass** der Spritzkopf einen zweiten Ringspalt aufweist.

17. Vorrichtung nach einem der Ansprüche 10 bis 16, **dadurch gekennzeichnet, dass** dem Spritzkopf eine von dem Kunststoffschlauch umfangene Kalibrierung angeordnet ist, wobei insbesondere die Kalibrierung nicht von dem Kunststoffschlauch berührt wird.

18. Kunststoff-Formteil, hergestellt durch ein Verfahren nach einem der Ansprüche 1 bis 9.

19. Kunststoff-Formteil, hergestellt mittels einer Vorrichtung nach einem der Ansprüche 11 bis 17.

20. Verwenden einer Vorrichtung zur Herstellung eines Kunststoffrohrs zur Herstellung von Kunststoff-Formteilen,
wobei die Vorrichtung einen Spritzkopf mit zumindest einem Ringspalt und eine dem Spritzkopf nachgeordnete Formstrecke mit einer Mehrzahl von rückführbaren Formbacken umfasst,
wobei die Kunststoff-Formteile aus einem geformten Kunststoffschlauch vereinzelbar sind,
wobei zumindest eine der Formbacken zur Herstellung des Kunststoffrohrs durch eine Formbacke zur Herstellung des Kunststoff-Formteils ausgetauscht wird.

21. Verwenden der Vorrichtung gemäß Anspruch 20, **dadurch gekennzeichnet, dass** das Kunststoffrohr als Wellrohr, insbesondere mit zumindest zwei Schichten, ausgebildet ist.

22. Verwenden der Vorrichtung nach Anspruch 20 oder 21, **dadurch gekennzeichnet, dass** das Kunststoff-Formteil eine Steckmuffe, insbesondere eine Doppel-Steckmuffe, ist.

23. Verwenden der Vorrichtung nach Anspruch 22, **dadurch gekennzeichnet, dass** die Steckmuffe zur Aufbringung auf das durch die Vorrichtung herstellbare Kunststoffrohr ausgebildet ist.
